# EUROPÄISCHE PATENTSCHRIFT

(11) **EP 0 315 021 B1**
(45) Veröffentlichungstag und Bekanntmachung des Hinweises auf die Patenterteilung: **03.03.1993**
(21) Anmeldenummer: 88117705.9
(22) Anmeldetag: 25.10.1988
(51) Int. Cl.: C08F 222/04, C08F 216/16

(54) **Verfahren zur Herstellung von Copolymerisaten aus ethylenisch ungesättigten Dicarbonsäureanhydriden und Alkylvinylethern**
Process for preparing copolymers of olefinically unsaturated dicarboxylic anhydride and alkyl vinyl ether
Procédé de préparation de copolymères d'anhydrydes d'acides dicarboxyliques à insaturation éthylénique et d'éthers alkylvinyliques

(30) Priorität: 31.10.1987 DE 3736996
(43) Veröffentlichungstag der Anmeldung: 10.05.1989
(73) Patentinhaber: BASF Aktiengesellschaft, 67063 Ludwigshafen (DE)
(72) Erfinder: Goertz, Hans-Helmut, Dr., D-6713 Freinsheim (DE); Raubenheimer, Hans-Juergen, D-6834 Ketsch (DE); Denzinger, Walter, D-6720 Speyer (DE)

(56) Entgegenhaltungen:
- GB-A- 1 063 056
- GB-A- 1 117 515
- US-A- 3 720 651
- US-A- 3 846 383

## Beschreibung

Die Herstellung von Copolymeren aus α,β-ungesättigten Dicarbonsäureanhydriden und Vinylethern erfolgt üblicherweise durch radikalische Polymerisation. Die Polymerisation kann in verschiedenen Ausführungsformen durchgeführt werden, z.B. lösungsmittelfrei, als Lösungspolymerisation oder als Fällungspolymerisation. So ist beispielsweise aus der US-PS 4 370 454 die Copolymerisation von Maleinsäureanhydrid mit Methylvinylether ohne Zusatz von Lösemitteln in einem gerührten Pulverbett und aus der DE-PS 540 101 die Substanzpolymerisation von Maleinsäureanhydrid mit Vinylethylether bekannt. In der GB-PS 712 220 werden als geeignete Lösemittel für eine Lösungscopolymerisation von Maleinsäureanhydrid mit Vinylalkylethern Aceton, Methylethylketon und Isopropylmethylketon angeführt. In der gleichen Patentschrift ist die Fällungspolymerisation in Cycloaliphaten und monocyclischen Aromaten beschrieben. Gemäß der GB-PS 1 117 515 wird Methylenchlorid als Fällungsmittel für die bei der Copolymerisation entstehenden Copolymerisate verwendet.

Die Fällungspolymerisation ist das vorteilhafteste Verfahren zur Gewinnung von Copolymeren aus α,β-ungesättigten Dicarbonsäureanhydriden und Alkylvinylethern. Insbesondere Benzol ist als Lösemittel geeignet (vgl. US-PS 3 553 183). Es wird dementsprechend auch in technischen Verfahren eingesetzt. Benzol bietet den Vorteil, daß sich in diesem Lösemittel für die Monomeren und Fällungsmittel für die Polymeren sowohl niedrigmolekulare wie auch sehr hochmolekulare Produkte herstellen lassen.

Ein Nachteil von Benzol ist in der Tatsache zu sehen, daß nur bis zu einer Monomerenkonzentration von etwa 20 Gew.% eine feinteilige Suspension des Polymerisates erhalten wird, bei höheren Konzentrationen jedoch eine störende Klumpenbildung auftritt, die zu Anbackungen der Copolymerisate an Rührer und Wandung der Polymerisationsapparatur führen. Es hat daher nicht an Versuchen gefehlt, diesen Mangel durch die Verwendung geeigneter Dispergiermittel zu mindern. So ist beispielsweise aus der GB-PS 1 063 056 bekannt, Polystyrol, Polyacrylsäurebutylester, Polyvinylisobutylether und verschiedene weitere Homo- und Copolymere als Schutzkolloid zu verwenden, um auch bei höheren Konzentrationen feinteilige Suspensionen zu erhalten. Um das Verkleben der Teilchen bei der Copolymerisation von Maleinsäureanhydrid mit Alkylvinylethern in Benzol zu verhindern, werden gemäß der Lehre der US-PS 3 532 771 spezielle Polyalkylenglykolvinylether verwendet. Der Verzicht auf einen solchen polymeren Dispergator wäre jedoch in jedem Fall wünschenswert, weil dadurch je nach der späteren Verwendung des fertigen Copolmerisates Störungen zu erwarten sind. So gibt es Fälle, in denen sich das Copolmerisat klar in Wasser löst, nicht aber der Dispergator, weil er vom Copolymerisat verschiedene Löslichkeitseigenschaften aufweist. Beim Polymerisieren in Benzol fallen sehr feinteilige Copolymerisate an, die eine mittlere Teilchengröße von ca. 0,05 bis 0,5 µm haben. Die aus den Suspensionen isolierten feinteiligen Copolymerisate stauben sehr stark bei der Handhabung. Außerdem sind Benzol und halogenierte Kohlenwasserstoffe, wie beispielsweise Methylenchlorid oder 1,1,1-Trichlorethan, in denen die oben genannten Polymerisationen als Fällungspolymerisationen ablaufen, physiologisch bedenkliche Lösemittel.

Der vorliegenden Erfindung liegt die Aufgabe zugrunde, ein Verfahren zur Herstellung von Copolymerisaten aus ethylenisch ungesättigten Dicarbonsäureanhydriden und Alkylvinylethern durch Fällungspolymerisation der den Copolymerisaten zugrundeliegenden Monomeren zur Verfügung zu stellen, bei dem der Einsatz physiologisch bedenklicher Lösemittel vermieden wird, und bei dem rieselfähige und wenig staubende Copolymerisat-Pulver anfallen.

Die Aufgabe wird erfindungsgemäß gelöst mit einem Verfahren zur Herstellung von Copolymerisaten aus ethylenisch ungesättigten Dicarbonsäureanhydriden und Alkylvinylethern durch Copolymerisieren von
a) ethylenisch ungesättigten Dicarbonsäureanhydriden mit 4 bis 6 C-Atomen,
b) Methylvinylether oder Mischungen aus Methylvinylether mit bis zu 10 Mol%, bezogen auf die Mischungen, anderen Alkylvinylethern und
c) 0 bis 2 Gew.%, bezogen auf die Monomeren (a) und (b), eines mindestens zwei ethylenisch ungesättigte Doppelbindungen enthaltenden Vernetzers
in einem Lösemittel, in dem die Monomeren löslich sind und in dem sich die entstehenden Copolymerisate praktisch nicht lösen, in Gegenwart von Polymerisationsinitiatoren, wenn man als Lösemittel mindestens 5 C-Atome aufweisende Ester aus gesättigten aliphatischen Carbonsäuren und einwertigen gesättigten Alkoholen einsetzt.

Es war nicht zu erwarten, daß man rieselfähige und praktisch nicht staubende Copolymerisate erhält, weil die Copolymerisation der Monomeren (a) und (b) in Methylacetat nach Art einer Lösungspolymerisation verläuft und Polymerisatlösungen ergibt. Beim Polymerisieren in Essigsäureethylester, Propionsäuremethylester und in Ethylformiat, erhält man dagegen Fällungspolymerisate, jedoch verkleben die Copolymerisate bereits bei der Herstellung sehr stark miteinander und schlagen sich am Rührer und an der Polymerisationsvorrichtung nieder.

Für das erfindungsgemäße Verfahren zur Herstellung von Copolymerisaten kommen als Komponente (a) monoethylenisch ungesättigte Dicarbonsäureanhydride mit 4 bis 6 C-Atomen in Betracht, z.B. Maleinsäureanhydrid, Citraconsäureanhyrid, Itaconsäureanhydrid, Ethylmaleinsäureanhydrid, Dimethylmaleinsäureanhydrid und Chlormaleinsäureanhydrid. Vorzugsweise verwendet man als Monomer der Gruppe (a) Maleinsäureanhydrid.

Als Monomer der Gruppe (b) kommt Methylvinylether in Betracht Außerdem eignen sich Mischungen aus Methylvinylether mit bis zu 10 Mol%, bezogen auf die Mischungen, anderen Alkylvinylethern, z.B. Ethylvinylether, n-Propylvinylether, Isopropylvinylether, n-Butylvinylether, Isobutylvinylether, 2-Ethylhexylvinylether, Dodecylvinylether und Octadecylvinylether. Die zuletzt genannten Alkylvinylether werden entweder allein oder in Mischung untereinander zusammen mit Methylvinylether eingesetzt. Die in Betracht kommenden Mischungen enthalten bis zu 10, vorzugsweise bis zu 5 Mol% der von Methylvinylether verschiedenen Alkylvinylether. Als Komponente (b) wird vorzugsweise Methylvinylether eingesetzt. Die Monomeren (a) und (b) polymerisieren bekanntlich im Mol-Verhältnis 1:1 und ergeben streng alternierende Copolymerisate. Die Monomeren (a) und (b) werden daher bei der Copolymerisation üblicher Weise im Mol-Verhältnis 1:1 eingesetzt. Um jedoch einen vollständigen Umsatz der ethylenisch ungesättigten Dicarbonsäureanhydride bei der Copolymerisation zu erreichen, wird Methylvinylether oder die Mischung aus Methylvinylether mit den anderen Alkylvinylethern in einem molaren Überschuß von bis zu 10 Mol% eingesetzt.

Die Copolymerisation kann gegebenenfalls auch in Gegenwart von Vernetzern vorgenommen werden. Als Vernetzer kommen die Monomeren der Gruppe (c) in Betracht, bei denen es sich um Verbindungen handelt, die mindestens zwei nicht konjugierte ethylenisch ungesättigte Doppelbindungen im Molekül enthalten.

Geeignete Vernetzer sind beispielsweise N,N'-Methylen-bisacrylamid, Polyethylenglykoldiacrylate und Polyethylenglykoldimethylacrylate, die sich jeweils von Polyethylenglykolen eines Molekulargewichts von 126 bis 8.500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff. Sofern man bei der Copolymerisation der Monomeren der Gruppen (a) und (b) einen Vernetzer mitverwendet, so wird dieser in Mengen von 0,005 bis 2, vorzugsweise 0,05 bis 1 Gew.%, bezogen auf die Monomeren (a) und (b) eingesetzt. Besonders bevorzugt ist jedoch die Herstellung von unvernetzten Copolymerisaten aus Maleinsäureanhydrid und Vinylethylether.

Erfindungsgemäß werden als Lösemittel bzw. Reaktionsmedium für die Copolymerisation Ester eingesetzt die mindestens 5 C-Atome im Molekül enthalten und aus gesättigten aliphatischen Carbonsäuren und einwertigen gesättigten Alkoholen erhältlich sind. Geeignete Carbonsäurealkylester sind beispielsweise Ameisensäure-n-butylester, Ameisensäure-sec-butylester, Ameisensäureisobutylester, Ameisensäure-tert.-butylester, Essigsäure-n-propylester, Essigsäureisopropylester, Essigsäurebutylester, Essigsäure-sec.-butylester, Essigsäureisobutylester, Essigsäure-tert.-butylester, Essigsäurepentylester in den verschiedenen isomeren Formen, Propionsäureethylester, Propionsäure-n-propylester, Propionsäureisopropylester, Propionsäurebutylester in seinen isomeren Formen, Buttersäuremethylester, Buttersäureethylester, Buttersäurepropylester, Buttersäureisopropylester, Isobuttersäuremethylester, Isobuttersäureethylester, Isobuttersäure-n-propylester, Isobuttersäureisopropylester. Ganz besonders bevorzugt ist die Verwendung von Essigsäure-n-propylester und Essigsäureisopropylester. Die Verwendung von Estern mit mehr als ingesamt 7 Kohlenstoffatomen ist zwar prinzipiell möglich, bringt aber keine Vorteile. Die gängisten, in Betracht kommenden Ester weisen insgesamt 5 oder 6 C-Atome auf. Auch Mischungen der oben genannten Ester können als Lösemittel verwendet werden.

Die Konzentration der Monomeren in den in Betracht kommenden Estern beträgt bis zu 40 Gew.% und liegt üblicherweise in dem Bereich von 15 bis 40, vorzugsweise 20 bis 35 Gew.%. Die bei der Fällungspolymerisation anfallenden Polymersuspensionen haben - da die Monomeren praktisch vollständig polymerisiert werden - Feststoffgehalte von 15 bis 40, vorzugsweise 20 bis 35 Gew.%. Während man bei der Verwendung von Benzol als Lösemittel Polymersuspensionen mit einem Feststoffgehalt von 30 Gew.% nur dann erhält, wenn man ein Schutzkolloid mitverwendet, ist es bei dem erfindungsgemäßen Verfahren möglich, auch in Abwesenheit von Schutzkolloiden 30 bis 35 gew.%ige Copolymerisat-Suspensionen herzustellen, ohne daß die Polymerisate verklumpen oder an den Wandungen der Polymerisationsapparatur oder am Rührer anbacken. Bei dem erfindungsgemäßen Verfahren wird das Copolymerisat in einer relativ grobkörnigen Form erhalten, so daß die Copolymerisatteilchen leicht aus der Polymersuspension gewonnen werden können, z.B. durch Filtrieren. Nach dem Entfernen des restlichen Lösemittels, das den Copolymerisatteilchen noch anhaftet, erhält man ein gut rieselfähiges, kaum staubendes Pulver. Die Trocknung des Copolymerisats kann in üblicher Weise erfolgen, wobei entweder unmittelbar die bei der Polymerisation angefallene Suspension oder nach Filtration der lösungsmittelfeuchte Filterkuchen eingesetzt werden. Hierfür können gängige Trocknungsapparate, wie Walzen-, Band-, Schaufel-, Sprüh- oder Wirbelbett-Trockner verwendet werden.

Die Copolymerisation wird in üblicher Weise durchgeführt. Die Bedingungen hängen im einzelnen davon ab, welches Molekulargewicht das Copolymerisat haben soll. Wird ein Copolymerisat gewünscht, das ein niedriges bzw. mittleres Molekulargewicht haben soll, so legt man zweckmäßigerweise eine Lösung des ethylenisch ungesättigten Dicarbonsäureanhydrids in einem mindestens 5 C-Atome aufweisenden aliphatischen Ester, insbesondere Essigsäureisopropylester, vor und dosiert den Vinylether zusammen mit einem Initiator innerhalb einer bestimmten Zeit zu. Vorzugsweise arbeitet man bei der Siedetemperatur des Ester, so daß die bei der Polymerisation entstehende Wärme durch Siedekühlung abgeführt wird. Eine Variation des Molekulargewichts ist in bekannter Weise durch Änderung der Konzentration, der Initiatormenge, der Zulaufzeiten und der Temperatur möglich. Falls Copolymerisate mit sehr hohen Molekulargewichten gewünscht werden, wird der Vinylether nicht zudosiert sondern ebenfalls vorgelegt und der Initiator nach Fortschritt der Polymerisation zudosiert. Technisch am einfachsten ist es, auch bei der Herstellung von hochmolekularen Copolymerisaten bei Siedetemperatur des Gemisches zu arbeiten. Die Temperatur kann in einem weiten Bereich variiert werden, z.B. von 30 bis 150 und vorzugsweise bis zu 120°C. Die Copolymerisation kann bei Normaldruck sowie bei erhöhtem oder auch bei vermindertem Druck durchgeführt werden. Durch Variation des Drucks ist es also möglich, die Polymerisation beispielsweise mit Hilfe eines einzigen in Betracht kommenden Esters in dem gesamten breiten Temperaturbereich bei der Siedetemperatur des Reaktionsgemisches vorzunehmen und mit Siedekühlung zu arbeiten. Wenn man bei der Copolymerisation Methylvinylether und Maleinsäureanhydrid im Lösemittel, z.B. in dem besonders bevorzugten Esssigsäureisopropylester vorlegt, so steigt mit fortschreitender Polymerisation auf Grund des Verbrauchs des niedrig siedenden Methylethers die Siedetemperatur des Gemisches langsam auf den Siedepunkt des Essigsäureisopropylesters an.

Die Polymerisation wird mit Hilfe der üblichen Radikalbildner initiiert, z.B. verwendet man Acylperoxide wie Diacetylperoxid, Dibenzoylperoxid und Dilaurylperoxid, Perester, wie Pivalinsäure-tert.-butylperester und 2-Ethylhexansäure-tert.-butylperester, Peroxide, wie Di-tert.-butylperoxid, Percarbonate, wie Dicyclohexylperoxidicarbonat und Azoverbindungen, wie 2,2'-Azobisisobutyronitril, 2,2'-Azobis(2,4-dimethylvaleronitril), 1,1'-Azobis(1-cyclohexancarbonitril), Dimethyl-2,2'-azobis(isobutyrat). Besonders geeignet ist 2,2'-Azobis(2,4-dimethylvaleronitril) als Initiator. Die Initiatoren werden in üblichen Mengen, d.h. von 0,01 bis etwa 2 Gew.%, bezogen auf das Gesamtgewicht der bei der Copolymerisation eingesetzten Monomeren verwendet. Wie oben bereits beschrieben, können die Copolymerisate aus den Suspensionen isoliert werden. Sie können jedoch auch in Form der Suspensionen weiterverarbeitet werden. Die mittlere Teilchengröße der Copolymerisate beträgt 1 bis 50 µm.

Die Copolymerisate stellen Zwischenprodukte dar, die verschiedenen Anwendungen zugänglich sind. Beispielsweise erhält man durch Umsetzung von Copolymerisaten aus Maleinsäureanhyrid und Alkylvinylether mit Alkoholen Umsetzungsprodukte, die als Bindemittel in Haarsprays verwendet werden. Durch vollständiges oder partielles Neutralisieren der genannten Copolymerisate mit Natronlauge erhält man die entsprechenden Natriumsalze, die als Zusatz zu Waschmitteln in Mengen von 1 bis 10 Gew.% Anwendung finden. Die freien Säuren der Copolymerisate, die durch Hydrolyse in wäßriger Lösung erhältlich sind, und die Alkalisalze bzw. Erdalkalisalze der Copolymerisate finden Verwendung in Zahnpasten. Vernetzte Copolymerisate, z.B. Copolymerisate aus Maleinsäureanhydrid, Methylvinylether und Butandioldiacrylat werden als Verdickungsmittel in Textildruckpasten verwendet. Die Copolymerisate haben K-Werte von 10 bis 150.

Die jeweils angegebenen K-Werte wurden an 1 gew.%igen Lösungen der Copolymerisate in Cyclohexanon bei einer Temperatur von 25°C nach H.Fikentscher bestimmt (vgl. Cellulosechemie, Band 13, Seiten 48 bis 64 und 71 bis 74 (1932)). Dabei bedeutet K=k·10³. Die in den Beispielen angegebenen Teile sind Gewichtsteile.

### Beispiel 1

In einer 2 l-Glasrührapparatur, die mit Rührer, einem auf -10°C gekühlten Rückflußkühler mit Trockenrohr und Dosiervorrichtung ausgestattet war, wurden 400 g Essigsäure-n-propylester und 125,6 g Maleinsäureanhydrid vorgelegt und solange gerührt, bis sich das Maleinsäureanhydrid gelöst hatte (ca. 15 min). Dann wurde eine Lösung von 90 g Methylvinylether in 350 g Essigsäurepropylester zugegeben. Die erhaltene Mischung wurde unter Rühren zum Sieden erhitzt. Von einer Zulauflösung, bestehend aus 0,2 g 2,2'-Azobis(2,4-dimethylvaleronitril) und 50 g Essigsäure-n-propylester wurden zunächst 6 ml zugegeben und 20 min anpolymerisiert. Dann wurde die restliche Zulauflösung innerhalb von 5 h zudosiert, wobei die Reaktionsmischung ständig am schwachen Sieden gehalten wurde. Bereits bei Zulaufbeginn war die einsetzende Polymerisation an der entstehenden Trübung zu erkennen. Die zunächst noch dünnflüssige schneeweiße Suspension wurde mit zunehmender Reaktionsdauer immer viskoser. Nach beendetem Zulauf wurde noch 1 h unter Rückfluß nachgerührt. Die erhaltene Suspension wurde abgesaugt und bei 50°C im Wasserstrahlvakuum getrocknet. Man erhielt 195 g eines grobkörnigen, schneeweißen nicht staubenden Pulvers. Der K-Wert des Copolymeren betrug 76.

### Beispiel 2

Es wurde wie in Beispiel 1 verfahren, jedoch wurde statt Essigsäurepropylester Essigsäurebutylester eingesetzt.

Man erhielt 198 g eines grobkörnigen nicht staubenden Pulvers. Der K-Wert des Copolymeren betrug 64.

### Beispiel 3

Es wurde wie in Beispiel 1 verfahren, jedoch wurde statt Essigsäure-n-propylester Essigsäureisobutylester eingesetzt.

Man erhielt 190 g eines gut rieselfähigen kaum staubenden Pulvers. Der K-Wert des Copolymeren betrug 64.

### Beispiel 4

Es wurde wie in Beispiel 1 verfahren, jedoch wurde statt Essigsäure-n-propylester Essigsäureisopropylester eingesetzt.

Man erhielt 198 g eines schneeweißen, staubarmen Pulvers. Der K-Wert des Copolymeren betrug 79.

### Beispiel 5

In einer Apparatur wie in Beispiel 1 angegeben, wurden 300 g Essigsäureisopropylester und 125,6 g Maleinsäureanhydrid vorgelegt und solange gerührt, bis sich das Maleinsäureanhydrid gelöst hatte (ca. 15 min). Dann wurde eine Lösung von 90 g Methylvinylether in 250 g Essigsäureisopropylester zugegeben. Die erhaltene Mischung wurde unter Rühren zum Sieden erhitzt. Eine Lösung von 0,2 g 2,2'-Azobis(2,4-dimethylvaleronitril) in 50 g Essigsäureisopropylester diente als Zulauf. Von diesem Zulauf wurden 6 ml zugegeben und 20 min anplymerisiert, wobei sich die einsetzende Polymerisation nach ca. 15 min an einer Trübung zu erkennen gab. Dann wurde die restlche Zulauflösung in 5 h zudosiert, wobei ständig an leichten Sieden gehalten wurde. Das weitere Vorgehen war analog Beispiel 1.

Man erhielt 195 g eines reinweißen, gut rieselfähigen staubarmen Copolymerisates. Der K-Wert betrug 91.

### Beispiel 6

Es wurde wie in Beispiel 5 verfahren, jedoch wurde Maleinsäureanhydrid in nur 250 g Essigsäureisopropylester und der Methylvinylether in 170 g Essigsäureisopropylester gelöst. Man erhielt 201 g eines reinweißen, feinpulvrigen nicht staubenden Copolymerisates. Der K-Wert betrug 98.

### Beispiel 7

In einer Apparatur wie in Beispiel 1 wurde eine Lösung von 125,6 g Maleinsäureanhydrid in 400 g Essigsäureisopropylester hergestellt. Eine Lösung von 90 g Methylvinylether in 350 g Essigsäureisopropylester diente als Zulaufmischung 1, eine Lösung von 0,8 g 2,2'-Azobis(2,4-dimethylvaleronitril) in 50 g Essigsäureisopropylester als Zulaufmischung 2. Die Vorlage wurde zum Sieden erhitzt und 50 ml Zulaufmischung 1 sowie 6 ml Zulaufmischung 2 zugegeben. Nach 20 min Anpolymerisieren, wobei sich die einsetzende Polymerisation an beginnender Trübung zu erkennen gab, wurden Zulaufmischung 1 in 4 h und Zulaufmischung 2 in 5 h parallel zudosiert, wobei die Reaktionsmischung ständig am schwachen Sieden gehalten wurde. Nach Zulaufende wurde das Reaktionsgemisch noch eine Stunde unter Rückflußsieden gerührt. Die erhaltene Suspension wurde in einem Schaufeltrockner bei 80°C unter Wasserstrahlvakuum getrocknet. Man erhielt 203 g eines reinweißen, rieselfähigen nicht staubenden Copolymerisates. Der K-Wert betrug 48.

## Patentansprüche

1. Verfahren zur Herstellung von Copolymerisaten aus ethylenisch ungesättigten Dicarbonsäureanhydriden und Alkylvinylethern durch Copolymerisieren von
a) ethylenisch ungesättigten Dicarbonsäureanhydriden mit 4 bis 6 C-Atomen,
b) Methylvinylether oder Mischungen aus Methylvinylether mit bis zu 10 Mol%, bezogen auf die Mischungen, anderen Alkylvinylethern und
c) 0 bis 2 Gew.%, bezogen auf die Monomeren (a) und (b), eines mindestens zwei ethylenisch ungesättigte Doppelbindungen enthaltenden Vernetzers
in einem Lösemittel, in dem die Monomeren löslich sind und in dem sich die entstehenden Copolymerisate praktisch nicht lösen, in Gegenwart von Polymerisationsinitiatoren, dadurch gekennzeichnet, daß man als Lösemittel mindestens 5 C-Atome aufweisende Ester aus gesättigten aliphatischen Carbonsäuren und einwertigen gesättigten Alkoholen einsetzt.

2. Verfahren nach Anspruch 1, dadurch gekennzeichnet, daß der Ester insgesamt 5 oder 6 C-Atome aufweist.

3. Verfahren nach den Ansprüchen 1 und 2, dadurch gekennzeichnet, daß man als Lösemittel einen Ester aus Essigsäure und einem einwertigen gesättigten Alkohol mit mindestens 3 C-Atomen einsetzt.

4. Verfahren nach den Ansprüchen 1 bis 3, dadurch gekennzeichnet, daß man Isopropylacetat als Lösemittel einsetzt.

5. Verfahren nach den Ansprüchen 1 bis 3, dadurch gekennzeichnet, daß man n-Propylacetat als Lösemittel einsetzt.

6. Verfahren nach den Ansprüchen 1 bis 5, dadurch gekennzeichnet, daß man
(a) Maleinsäureanhydrid und
(b) Methylvinylether
in Isopropylacetat copolymerisiert.

## Claims

1. A process for the preparation of a copolymer of ethylenically unsaturated dicarboxylic anhydrides and alkyl vinyl ethers by copolymerization of
a) an ethylenically unsaturated dicarboxylic anhydride of 4 to 6 carbon atoms,
b) methyl vinyl ether or a mixture of methyl vinyl ether with up to 10 mol %, based on the mixture, of other alkyl vinyl ethers and
c) from 0 to 2% by weight, based on the monomers (a) and (b), of a crosslinking agent containing two or more ethylenically unsaturated double bonds,
in a solvent in which the monomers are soluble and in which the resulting copolymers are virtually insoluble, in the presence of a polymerization initiator, wherein the solvent used is an ester of not less than 5 carbon atoms which is obtained from a saturated aliphatic carboxylic acid and a saturated monohydric alcohol.

2. A process as claimed in claim 1, wherein the ester has a total of 5 or 6 carbon atoms.

3. A process as claimed in claims 1 and 2, wherein the solvent used is an ester of acetic acid and a saturated monohydric alcohol of not less than 3 carbon atoms.

4. A process as claimed in any of claims 1 to 3, wherein the solvent used is isopropyl acetate.

5. A process as claimed in any of claims 1 to 3, wherein the solvent used is n-propyl acetate.

6. A process as claimed in any of claims 1 to 5, wherein
(a) maleic anhydride and
(b) methyl vinyl ether
are copolymerized in isopropyl acetate.

## Revendications

1. Procédé de fabrication de copolymères à partir d'anhydrides d'acides dicarboxyliques à insaturation éthylénique et d'éthers alkylvinyliques, par la copolymérisation
a) d'anhydrides d'acides dicarboxyliques à insaturation éthylénique, qui comportent de 4 à 6 atomes de carbone,
b) d'éther méthylvinylique ou de mélange de l'éther méthylvinylique avec jusqu'à 10% molaires, par rapport aux mélanges, d'autres éthers alkylvinyliques et
c) de 0 à 2% en poids, par rapport aux monomères (a) et (b), d'un agent de réticulation contenant au moins deux doubles liaisons éthyléniquement insaturées,
dans un solvant dans lequel les monomères sont solubles et dans lequel les copolymères qui se forment ne sont pratiquement pas solubles, en présence d'amorceurs de polymérisation, caractérisé en ce que l'on utilise à titre de solvants, des esters comportant au moins 5 atomes de carbone d'acides carboxyliques aliphatiques saturés et d'alcools monohydroxylés saturés.

2. Procédé suivant la revendication 1, caractérisé en ce que l'ester comporte au total 5 ou 6 atomes de carbone.

3. Procédé suivant les revendications 1 et 2, caractérisé en ce que l'on utilise, à titre de solvant, un ester de l'acide acétique et d'un alcool monohydroxylé saturé qui comporte au moins 3 atomes de carbone.

4. Procédé suivant les revendication 1 à 3, caractérisé en ce que l'on utilise l'acétate d'isopropyle à titre de solvant.

5. Procédé suivant les revendications 1 à 3, caractérisé en ce que l'on utilise l'acétate de n-propyle à titre de solvant.

6. Procédé suivant les revendications 1 à 5, caractérisé en ce que l'on copolymérise
(a) l'anhydride maléique et
(b) l'éther méthylvinylique,
dans l'acétate d'isopropyle.
